# EUROPÄISCHE PATENTANMELDUNG

(11) **EP 3 067 159 A1**
(43) Veröffentlichungstag der Anmeldung: **14.09.2016**
(21) Anmeldenummer: 15158347.3
(22) Anmeldetag: 10.03.2015
(51) Int. Cl.: B25D 17/08, B23P 11/00

(54) **Mitnahmestege in Werkzeugaufnahme**

(71) Anmelder: HILTI Aktiengesellschaft, 9494 Schaan (LI)
(72) Erfinder: Schallert, Manfred, 6710 Neuzing (AT); Mueller, Frank, 75181 Pforzheim (DE); Dr. Kußmaul, Rainer, 86926 Greifenberg (DE)
(74) Vertreter: Hilti Aktiengesellschaft Corporate Intellectual Property

(57) **Zusammenfassung**

Verfahren zur Herstellung einer Werkzeugaufnahmeeinrichtung (3), vorzugsweise für einen Bohr-, Meißel- oder Kombihammer, sowie zur Anordnung von Mitnahmestegen (8, 9) an der Werkzeugaufnahmeeinrichtung (3) mit den Verfahrensschritten,
- Positionieren wenigstens eines Mitnahmestegs (8, 9) an einer Außenumfangsfläche (15) wenigstens eines Bestandteils (18) eines Umformwerkzeugs (17);
- Einführen des wenigstens einen Bestandteils (18) des Umformwerkzeugs (17) in eine zylindrische Durchbohrung (7) der Werkzeugaufnahmeeinrichtung (3), sodass wenigstens eine Seitenfläche (8a, 9a) des Mitnahmestegs (8, 9) an einer Innenumfangsfläche (11) der Werkzeugaufnahmeeinrichtung (3) anliegt; und
- Ausüben einer Kraft auf die Außenumfangsfläche der Werkzeugaufnahmeeinrichtung (3) zum Umformen der Werkzeugaufnahmeeinrichtung (3) und insbesondere zum Umformen wenigstens eines Teilbereichs der Innenumfangsfläche (11) der Werkzeugaufnahmeeinrichtung (3), an dem die wenigstens eine Seitenfläche (8a, 9a) des Mitnahmestegs (8, 9) anliegt, sodass eine kraft- und formschlüssige Verbindung zwischen der Innenumfangsfläche (11) der Werkzeugaufnahmeeinrichtung (3) und dem wenigstens einen Mitnahmesteg (8, 9) entsteht.

## Beschreibung

Die vorliegende Erfindung betrifft ein Verfahren zur Herstellung einer Werkzeugaufnahmeeinrichtung, vorzugsweise für einen Bohr-, Meißel- oder Kombihammer, sowie zur Anordnung von Mitnahmestegen an der Werkzeugaufnahmeeinrichtung.

Werkzeugmaschinen, wie z.B. Bohr-, Meißel- oder Kombihammer enthalten für gewöhnlich eine zylindrisch ausgestaltete Werkzeugaufnahmeeinrichtung, in die ein Ende eines Werkzeugs (beispielsweise ein Meißel) aufgenommen und gehalten wird. Um eine Drehmitnahme des Werkzeugs in der Werkzeugaufnahmeeinrichtung zu ermöglichen, ist an der Innenseite der Werkzeugaufnahmeeinrichtung eine Anzahl an sogenannten Mitnahmestegen vorgesehen. Die Mitnahmestege sind dabei üblicherweise als Erhebungen an der Innenoberfläche der Werkzeugaufnahmeeinrichtung ausgestaltet und greifen in entsprechend ausgeformte Vertiefungen an dem Werkzeug ein. Die Werkzeugaufnahmeeinrichtung ist normalerweise aus einem ersten Werkstoff gefertigt und die Mitnahmestege sind aus einem zweiten wesentlich härteren Werkstoff gefertigt. Die Mitnahmestege sind hierdurch verschleißresistenter.

Die Herstellung derartiger Werkzeugaufnahmeeinrichtung mit entsprechenden Mitnahmestegen ist jedoch aufwendig und kostenintensiv, da sowohl ein im Wesentlichen zylindrischer Grundkörper in die eigentliche Form der Werkzeugaufnahmeeinrichtung geformt als auch die Mitnahmestege an die entsprechenden Positionen an der Innenseite der Werkzeugaufnahmeeinrichtung gebracht werden müssen.

Es ist daher Aufgabe der vorliegenden Erfindung ein Verfahren zur Herstellung einer Werkzeugaufnahmeeinrichtung, vorzugsweise für einen Bohr-, Meißel- oder Kombihammer, sowie zur Anordnung von Mitnahmestegen an der Werkzeugaufnahmeeinrichtung bereitzustellen, mit dem das vorstehend genannte Problem gelöst und insbesondere eine Werkzeugaufnahmeeinrichtung mit entsprechenden Mitnahmestegen einfacher, effizienter und kostengünstiger gestaltet werden kann.

Diese Aufgabe wird erfindungsgemäss durch den Gegenstand des unabhängigen Anspruchs 1 gelöst. Vorteilhafte Ausgestaltungsformen der vorliegenden Erfindung finden sich in den abhängigen Unteransprüchen.

Hierzu wird ein ein Verfahren bereitgestellt zur Herstellung einer Werkzeugaufnahmeeinrichtung, vorzugsweise für einen Bohr-, Meißel- oder Kombihammer, sowie zur Anordnung von Mitnahmestegen an der Werkzeugaufnahmeeinrichtung.

Erfindungsgemäß sind dabei die folgenden Verfahrensschritte vorgesehen,
- Positionieren wenigstens eines Mitnahmestegs an einer Außenumfangsfläche wenigstens eines Bestandteils eines Umformwerkzeugs;
- Einführen des wenigstens einen Bestandteils des Umformwerkzeugs in eine zylindrische Durchbohrung der Werkzeugaufnahmeeinrichtung, sodass wenigstens eine Seitenfläche des Mitnahmestegs an einer Innenumfangsfläche der Werkzeugaufnahmeeinrichtung anliegt; und
- Ausüben einer Kraft auf die Außenumfangsfläche der Werkzeugaufnahmeeinrichtung zum Umformen der Werkzeugaufnahmeeinrichtung und insbesondere zum Umformen wenigstens eines Teilbereichs der Innenumfangsfläche der Werkzeugaufnahmeeinrichtung, an dem die wenigstens eine Seitenfläche des Mitnahmestegs anliegt, sodass eine kraft- und formschlüssige Verbindung zwischen der Innenumfangsfläche der Werkzeugaufnahmeeinrichtung und dem wenigstens einen Mitnahmesteg entsteht.

Gemäß einer vorteilhaften Ausführungsform der vorliegenden Erfindung kann dabei eine Wärmebehandlung wenigstens an der kraft- und formschlüssigen Verbindung zwischen der Innenumfangsfläche der Werkzeugaufnahmeeinrichtung und dem wenigstens einen Mitnahmesteg vorgesehen sein. Hierdurch kann die mechanische Festigkeit der Mitnahmestege an der Innenumfangsfläche der Werkzeugaufnahmeeinrichtung weiter erhöht werden.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: eine schematische Seitenansicht auf eine Werkzeugmaschine mit Werkzeugaufnahmeeinrichtung und Werkzeug;
- Fig. 2: eine perspektivische Ansicht der Werkzeugaufnahmeeinrichtung und des Werkzeugs in einem nicht verbundenen Zustand;
- Fig. 3: eine Vorderansicht der Werkzeugaufnahmeeinrichtung und des Werkzeugs;
- Fig. 4: eine Schnittansicht entlang einer Seitenansicht einer Werkzeugaufnahmeeinrichtung und eines Umformwerkzeugs samt Mitnahmestegen in einem nicht verbundenen Zustand;
- Fig. 5: eine erste seitliche Schnittansicht auf ein Umformwerkzeug;
- Fig. 6: eine zweite seitliche Schnittansicht auf das Umformwerkzeug mit zwei auf das Umformwerkzeug positionierten Mitnahmestegen;
- Fig. 7: eine Schnittansicht entlang einer Vorderseite der Werkzeugaufnahmeeinrichtung und des Umformwerkzeugs samt Mitnahmestegen in einem nicht verbundenen Zustand;
- Fig. 8: eine Schnittansicht entlang der Seitenansicht der Werkzeugaufnahmeeinrichtung und des Umformwerkzeugs samt Mitnahmestegen in einem verbundenen Zustand;
- Fig. 9: eine Schnittansicht entlang der Vorderseite der Werkzeugaufnahmeeinrichtung und des Umformwerkzeugs samt Mitnahmestegen in einem verbundenen Zustand; und
- Fig. 10: eine Schnittansicht eines Details der Werkzeugaufnahmeeinrichtung und des Mitnahmesteges in einem verbundenen Zustand.

### Ausführungsbeispiel:

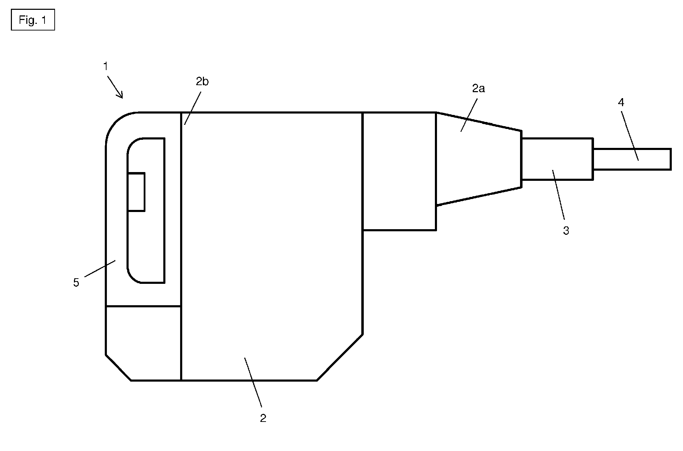

Fig. 1 zeigt eine Werkzeugmaschine 1 in Form eines Bohrhammers. Die Werkzeugmaschine 1 kann jedoch auch in jeder anderen geeigneten Form, wie z.B. als Meißel- oder Kombihammer, verwirklicht sein.

Die Werkzeugmaschine 1 enthält im Wesentlichen ein Gehäuse 2, eine Werkzeugaufnahmeeinrichtung 3 und ein Werkzeug 4. Die Werkzeugaufnahmeeinrichtung 3 dient dazu, ein in der Werkzeugmaschine 1 erzeugtes Drehmoment sowie vibrationsähnliche Schläge (d.h. Bewegung in axialer Richtung) auf das Werkzeug 4 zu übertragen. Durch diese Übertragung kann mit Hilfe des Werkzeugs 4 ein entsprechend geeigneter Werkstoff (z.B. mineralisches Gestein) bearbeitet werden.

Bei dem Werkzeug 4 kann es sich beispielsweise um einen Meißel oder ähnliches handeln.

Das Gehäuse 2 weist ein vorderes Ende 2a und ein hinteres Ende 2b auf. An dem vorderen Ende 2a ist die Werkzeugaufnahme 3 zur Aufnahme eines Werkzeugs 4 positioniert. An dem hinteren Ende 2b ist wiederum ein Handgriff 5 zum Halten und Führen der Werkzeugmaschine 1 angeordnet.

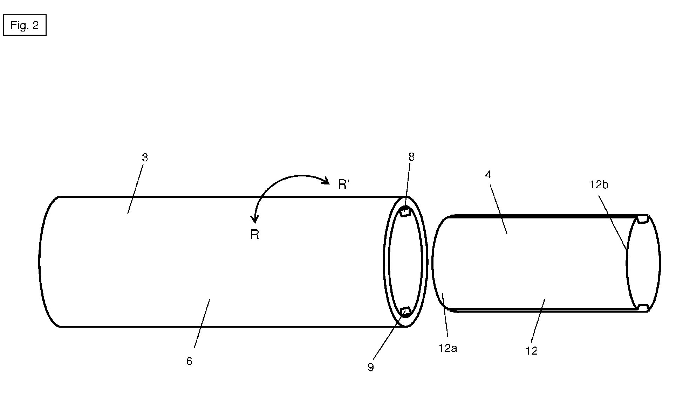

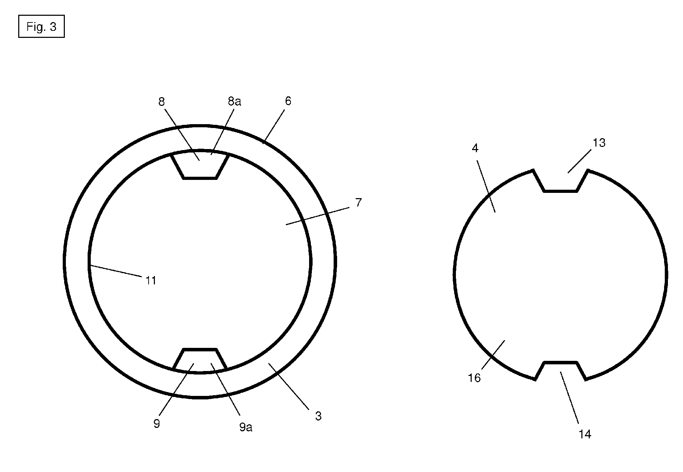

Wie insbesondere in Fig. 2 und 3 dargestellt, enthält die Werkzeugaufnahmeeinrichtung 3 im Wesentlichen einen zylindrischen Grundkörper 6 mit einer zylindrischen Durchbohrung 7. Die zylindrische Durchbohrung 7 enthält wiederum einen ersten Mitnahmesteg 8 und einen zweiten Mitnahmesteg 9. Der erste Mitnahmesteg 8 und der zweite Mitnahmesteg 9 weisen jeweils eine Querschnittsfläche 10 in Form eines gleichschenkligen Trapezes auf. Es ist jedoch auch möglich, dass die Querschnittsfläche 10 des ersten Mitnahmestegs 8 und des zweiten Mitnahmestegs 9 jede andere geeignete Form aufweist. Der erste Mitnahmesteg 8 ist mit einer Grundfläche 8a an einer Innenumfangsfläche 11 des Grundkörpers 6 der Werkzeugaufnahmeeinrichtung 3 angeordnet. Der zweite Mitnahmesteg 9 ist ebenfalls mit einer Grundfläche 9a an der Innenumfangsfläche 11 des Grundkörpers 6 der Werkzeugaufnahmeeinrichtung 3 angeordnet und liegt dabei dem ersten Mitnahmesteg 8 gegenüber. Gemäß einer alternativen Ausgestaltungsform können an dem Grundkörper 6 auch mehr oder weniger als zwei Mitnahmestege vorgesehen sein. Es ist dabei nicht notwendig, dass jeweils zwei Mitnahmestege gegenüberliegend an der Innenumfangsfläche 11 des Grundkörpers 6 positioniert sind. Es ist zu beachten, dass das Material der Mitnahmestege 8, 9 wesentlich härter ist als das Material des Grundkörpers 6 der Werkzeugaufnahmeeinrichtung 3.

Wie ebenfalls in Fig. 2 und 3 dargestellt, enthält das Werkzeug 4 im Wesentlichen eine zylindrische Grundform 12 mit einem ersten Ende 12a und einem zweiten Ende 12b. Mit dem ersten Ende 12a kann das Werkzeug 4 in die zylindrische Durchbohrung 7 der Werkzeugaufnahmeeinrichtung 3 eingeführt werden.

In den Fig. 1 und 2 ist das Werkzeug 4 ohne entsprechende Schneide zur Bearbeitung eines Werkstoffs an dem zweiten Ende 12b dargestellt. Das als Meißel ausgestaltete Werkzeug 4 enthält eine erste Vertiefung 13 sowie eine zweite Vertiefung 14, wobei die beiden Vertiefungen 13, 14 gegenüberliegend an der Außenumfangsfläche 15 der zylindrischen Grundform 12 angeordnet sind. Die erste Vertiefung 13 und die zweite Vertiefung 14 weisen jeweils eine Querschnittsfläche 16 in Form eines gleichschenkligen Trapezes auf. Es ist jedoch auch möglich, dass die Querschnittsfläche 16 der ersten und zweiten Vertiefung 13, 14 jede andere geeignete Form aufweist. Die Querschnittsfläche 16 der ersten und zweiten Vertiefung 13, 14 muss jedoch dabei der Querschnittsfläche 10 des ersten und zweiten Mitnahmestegs 8, 9 entsprechen.

Damit das in der Werkzeugmaschine 1 erzeugte Drehmoment sowie die vibrationsähnlichen Schläge auf das Werkzeug 4 übertragen werden können, wird das als Meißel ausgestaltete Werkzeug 4 mit dem ersten Ende 12a in die zylindrische Durchbohrung 7 der Werkzeugaufnahmeeinrichtung 3 eingeführt. Aufgrund der formschlüssigen Verbindung der Mitnahmestege 8, 9 des Werkzeugs 4 mit den entsprechenden Vertiefungen 13, 14 der Werkzeugaufnahmeeinrichtung 3 können sich das Werkzeug 4 sowie die Werkzeugaufnahmeeinrichtung 3 nicht relativ zueinander in Richtung R oder R' verdrehen. Hierdurch kann ein Drehmoment von der Werkzeugaufnahmeeinrichtung 3 auf das Werkzeug 4 übertragen werden.

Nachfolgend wird das erfindungsgemäße Verfahren zur Herstellung einer Werkzeugaufnahmeeinrichtung 3, vorzugsweise für einen Bohr-, Meißel- oder Kombihammer, sowie zur Anordnung von Mitnahmestegen 8, 9 an der Werkzeugaufnahmeeinrichtung 3 beschrieben.

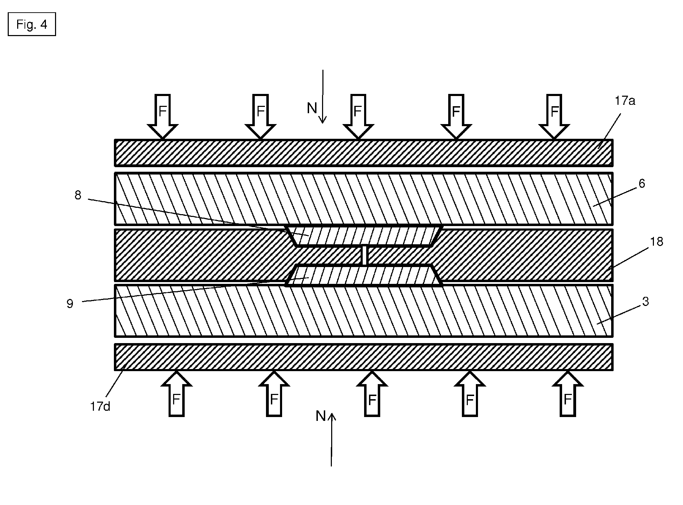

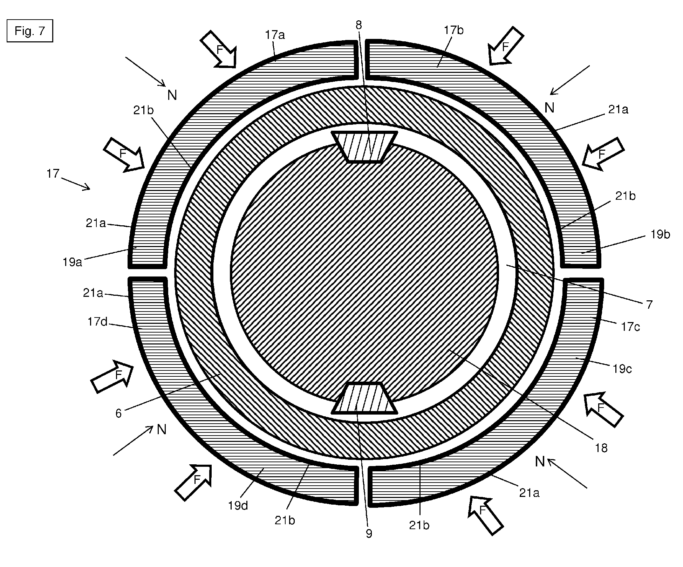

Wie in Fig. 4 und 7 dargestellt, werden die beiden Mitnahmestege 8, 9 mit Hilfe eines Umformwerkzeugs 17 an die Innenumfangsfläche 11 der Werkzeugaufnahmeeinrichtung 3 befestigt. Es ist zu beachten, dass in den Figuren nicht das vollständige Umformwerkzeug 17 dargestellt ist und lediglich einige der wichtigsten Bauteile schematisch dargestellt werden.

Das Umformwerkzeug 17 enthält dabei eine erste Umformschale 17a, zweite Umformschale 17b, dritte Umformschale 17c und vierte Umformschale 17d (vgl. Fig. 7). Die vier Umformschalen 17a, 17b, 17c, 17d sind dabei um einen zentralen Dorn 18 positioniert. Jeder der vier Umformschalen 17a, 17b, 17c, 17d weist eine gebogene Grundform 19a, 19b, 19c, 19d auf mit einer konkaven Oberfläche 20a, 20b, 20c, 20d und einer konvexen Oberfläche 21 a, 21 b, 21c, 21d. Die vier Umformschalen 17a, 17b, 17c, 17d sind so um den zentralen Dorn 18 angeordnet, dass die konkave Oberfläche 21a, 21b, 21c, 21d einer jeden Umformschale 17a, 17b, 17c, 17d zu dem Dorn 18 gerichtet ist.

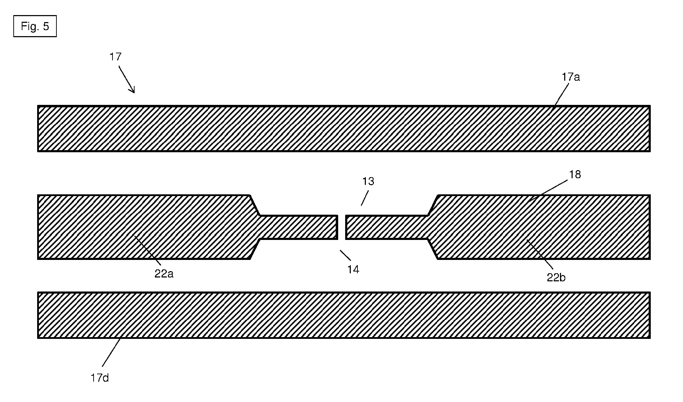

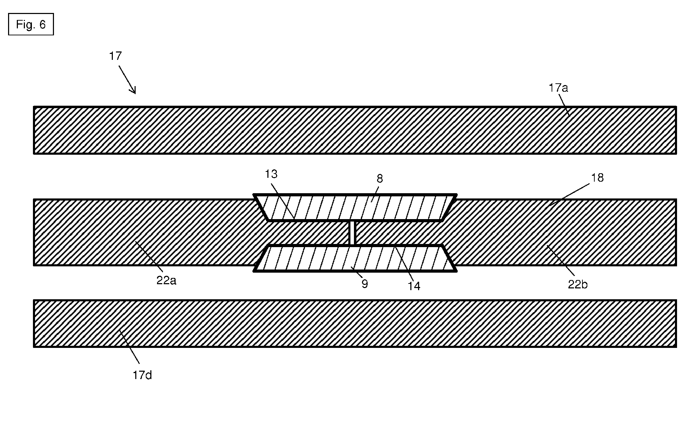

Der zentrale Dorn 18 enthält im Wesentlichen einen zylindrischen zweiteiligen Grundkörper 22, der einen ersten Grundkörperteil 22a und einen zweiten Grundkörperteil 22b enthält. Der Grundkörper 22 enthält darüber hinaus eine erste Ausnehmung 23 und eine zweite Ausnehmung 24 (vgl. Fig. 5). Die erste Ausnehmung 23 entspricht im Wesentlichen der Form des ersten Mitnahmesteges 8 und dient dazu jeweils den ersten Mitnahmesteg 8 in sich aufzunehmen. Die zweite Ausnehmung 24 entspricht im Wesentlichen der Form des zweiten Mitnahmesteges 9 und dient dazu jeweils den zweiten Mitnahmesteg 9 in sich aufzunehmen. Die Form der ersten und zweiten Ausnehmung 23, 24 ist dabei jedoch so gewählt, dass der jeweilige Mitnahmesteg 8, 9 zu einem gewissen Anteil aus der entsprechenden Ausnehmung 23, 24 herausragt (vgl. Fig. 6 und 7).

Das Umformwerkzeug 17 hat im Wesentlichen eine erste Stellung und eine zweite Stellung und kann reversible zwischen der ersten und der zweiten Stellung bewegt werden.

In der ersten Stellung ist das Umformwerkzeug 17 geöffnet, d.h. die vier Umformschalen 17a, 17b, 17c, 17d sind von dem Dorn 18 wegbewegt, sodass ein gewisser Abstand zwischen den einzelnen Umformschalen 17a, 17b, 17c, 17d und dem Dorn 18 entsteht (vgl. Fig. 4 und 7). In den Abstand zwischen den einzelnen Umformschalen 17a, 17b, 17c, 17d und dem Dorn 18 kann der zylindrische Grundkörper 6 der Werkzeugaufnahmeeinrichtung 3 positioniert werden. In der zweiten Stellung ist das Umformwerkzeug 17 geschlossen, d.h. jede Umformschale 17a, 17b, 17c, 17d ist auf den Dorn 18 in entsprechender Richtung N zubewegt, sodass die Werkzeugaufnahmeeinrichtung 3 fest zwischen dem Dorn 18 und den einzelnen Umformschalen 17a, 17b, 17c, 17d gehalten ist. Druck F wird von Außen auf die einzelnen Umformschalen 17a, 17b, 17c, 17d ausgeübt, damit sich das Material des Grundkörpers 6 der Werkzeugaufnahmeeinrichtung 3 an die Form des Dorns 18 und der Umformschalen 17a, 17b, 17c, 17d anpasst.

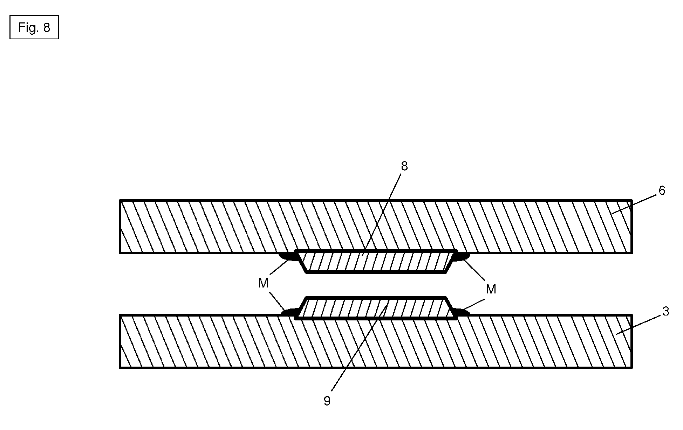

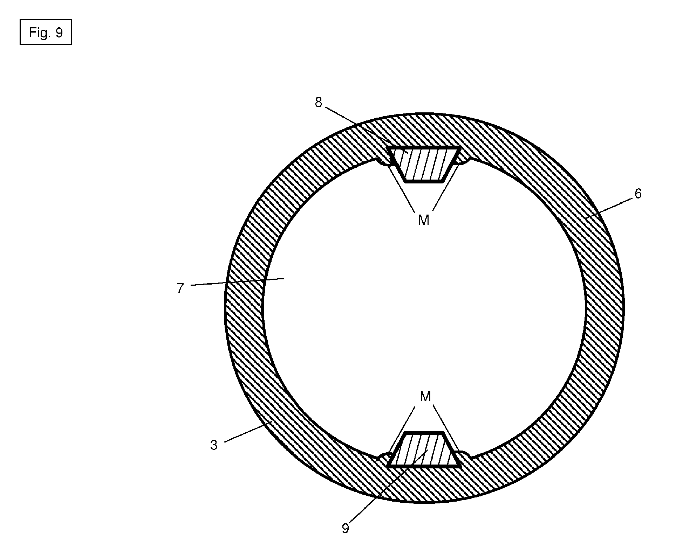

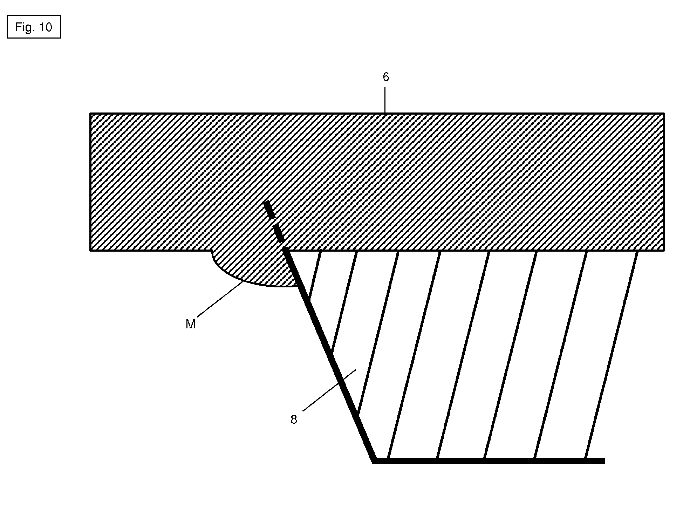

Dadurch, dass sowohl das Material der Mitnahmestege 8, 9 als auch das Material des Dorns 18 und der Umformschalen 17a, 17b, 17c, 17d wesentlich härter ist als das Material des Grundkörpers 6 der Werkzeugaufnahmeeinrichtung 3 werden die Anteile der Mitnahmestege 8, 9, die aus den Ausnehmungen 23, 24 des Dorns 18 herausragen, in die Innenumfangsfläche 11 des Grundkörpers 6 der Werkzeugaufnahmeeinrichtung 3 gedruckt bzw. geknetet. Die Mitnahmestege 8, 9 dringen in den Grundkörper 6 ein, sodass Material M von dem Grundkörper 6 über die Ecken der Mitnahmestege 8, 9 gedrückt bzw. geknetet wird. Hierdurch werden die Mitnahmestege 8, 9 fest mit der Innenumfangsfläche 11 des Grundkörpers 6 verbunden (vgl. Fig. 8, 9, 10).

Nachdem die Mitnahmestege 8, 9 an die Innenumfangsfläche 11 des Grundkörpers 6 geknetet sind, bewegt sich das Umformwerkzeug 17 von der zweiten Stellung in die erste Stellung, sodass sich die Umformschalen 17a, 17b, 17c, 17d von dem Dorn 18 wegbewegen und die Werkzeugaufnahmeeinrichtung 3 wieder freiliegt. Die Mitnahmestege 8, 9 verbleiben dabei an der Innenumfangsfläche 11 des Grundkörpers 6. Durch den zweiteilig ausgestalteten Dorn 18 kann dieser von beiden Enden aus dem Grundkörper 6 der Werkzeugaufnahmeeinrichtung 3 entnommen werden.

Zusätzlich zu den vorstehend beschriebenen Verfahrensschritten, kann nach Beendigung des Druckausübens von dem Umformwerkzeug 17 auf die Werkzeugaufnahmeeinrichtung 3 noch eine Wärmebehandlung folgen. Hierbei wird gezielt Hitze auf die Stellen der Innenumfangsfläche 11 des Grundkörpers 6 gerichtet, an denen die Mitnahmestege 8, 9 mit dem Grundkörper 6 der Werkzeugaufnahmeeinrichtung 3 verbunden sind. Durch die Wärmebehandlung kann die mechanische Festigkeit der Mitnahmestege 8, 9 an der Innenumfangsfläche 11 der Werkzeugaufnahmeeinrichtung 3 weiter erhöht werden.

## Patentansprüche

1. Verfahren zur Herstellung einer Werkzeugaufnahmeeinrichtung (3), vorzugsweise für einen Bohr-, Meißel- oder Kombihammer, sowie zur Anordnung von Mitnahmestegen (8, 9) an der Werkzeugaufnahmeeinrichtung (3),
**gekennzeichnet durch** die Verfahrensschritte
- Positionieren wenigstens eines Mitnahmestegs (8, 9) an einer Außenumfangsfläche (15) wenigstens eines Bestandteils (18) eines Umformwerkzeugs (17);
- Einführen des wenigstens einen Bestandteils (18) des Umformwerkzeugs (17) in eine zylindrische Durchbohrung (7) der Werkzeugaufnahmeeinrichtung (3), sodass wenigstens eine Seitenfläche (8a, 9a) des Mitnahmestegs (8, 9) an einer Innenumfangsfläche (11) der Werkzeugaufnahmeeinrichtung (3) anliegt; und
- Ausüben einer Kraft (F) auf die Außenumfangsfläche der Werkzeugaufnahmeeinrichtung (3) zum Umformen der Werkzeugaufnahmeeinrichtung (3) und insbesondere zum Umformen wenigstens eines Teilbereichs der Innenumfangsfläche (11) der Werkzeugaufnahmeeinrichtung (3), an dem die wenigstens eine Seitenfläche (8a, 9a) des Mitnahmestegs (8, 9) anliegt, sodass eine kraft- und formschlüssige Verbindung zwischen der Innenumfangsfläche (11) der Werkzeugaufnahmeeinrichtung (3) und dem wenigstens einen Mitnahmesteg (8, 9) entsteht.

2. Verfahren nach Anspruch 1,
**gekennzeichnet durch** eine Wärmebehandlung wenigstens an der kraft- und formschlüssigen Verbindung zwischen der Innenumfangsfläche (11) der Werkzeugaufnahmeeinrichtung (3) und dem wenigstens einen Mitnahmesteg (8, 9).
